(19)

**Europäisches Patentamt**
**European Patent Office**
**Office européen des brevets**

(11) **EP 4 707 599 A1**

(12) **EUROPEAN PATENT APPLICATION**
published in accordance with Art. 153(4) EPC

(43) Date of publication:
**11.03.2026 Bulletin 2026/11**

(21) Application number: **23943357.6**

(22) Date of filing: **30.11.2023**

(51) International Patent Classification (IPC):
**F04B 49/06** (2006.01)   **F04B 49/20** (2006.01)
**H02K 9/193** (2006.01)

(86) International application number:
**PCT/CN2023/135378**

(87) International publication number:
**WO 2025/000881 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.06.2023   CN 202310760914**

(71) Applicant: **VOYAH Automotive Technology Co., Ltd.**
**Wuhan, Hubei 430109 (CN)**

(72) Inventors:
• **YANG, Guangming**
  **Wuhan, Hubei 430050 (CN)**
• **ZHAO, Shengliang**
  **Wuhan, Hubei 430050 (CN)**
• **HUANG, Min**
  **Wuhan, Hubei 430050 (CN)**

• **FANG, Cheng**
  **Wuhan, Hubei 430050 (CN)**
• **TANG, Zhiyao**
  **Wuhan, Hubei 430050 (CN)**
• **GONG, Haiqing**
  **Wuhan, Hubei 430050 (CN)**
• **XU, Pengfei**
  **Wuhan, Hubei 430050 (CN)**
• **SONG, Ruiqi**
  **Wuhan, Hubei 430050 (CN)**
• **LI, Qiaoli**
  **Wuhan, Hubei 430050 (CN)**
• **LAN, Ping**
  **Wuhan, Hubei 430050 (CN)**

(74) Representative: **Boult Wade Tennant LLP**
**Salisbury Square House**
**8 Salisbury Square**
**London EC4Y 8AP (GB)**

(54) **CONTROL METHOD AND APPARATUS FOR COOLING OIL PUMP OF OIL-COOLED MOTOR, DEVICE AND MEDIUM**

(57)     A control method and apparatus for a cooling oil pump of an oil-cooled motor, a device, and a medium, where the method includes: acquiring a current loss heat power of the motor; determining a current operating condition of a vehicle according to a power interval in which the loss heat power is located; determining a target temperature of a lubricating oil according to the current operating condition of the vehicle; determining a target flow rate of the oil pump according to the current operating condition of the vehicle, the current loss heat power of the motor, and the target temperature of the lubricating oil; and determining a target rotational speed of the oil pump according to the target flow rate of the oil pump. This method does not require a rotational speed of the oil pump to be frequently adjusted, thereby ensuring a service life of the oil pump.

| Acquire a current loss heat power of the motor | S110 |
| Determine a current operating condition of a vehicle according to a power interval in which the loss heat power is located | S120 |
| Determine a target temperature of a lubricating oil according to the current operating condition of the vehicle | S130 |
| Determine a target flow rate of the oil pump according to the current operating condition of the vehicle, the current loss heat power of the motor, and the target temperature of the lubricating oil | S140 |
| Determine a target rotational speed of the oil pump according to the target flow rate of the oil pump | S150 |

FIG. 1

EP 4 707 599 A1

**Description**

**CROSS-REFERENCE TO RELATED APPLICATIONS**

This application claims priority to Chinese Patent Application No. 202310760914.7, filed on June 27, 2023, which is hereby incorporated by reference in its entirety.

**TECHNICAL FIELD**

The present disclosure relates to the field of vehicle control technology, and in particular to a control method and apparatus for a cooling oil pump of an oil-cooled motor, a device, and a medium.

**BACKGROUND**

In order for insulation safety of enameled wires for motors, a cooling system of an oil-cooled motor needs to be independent of an external water cooling system, and exchanges heat with a cooling water circuit through a heat exchanger or other heat exchange structures, thereby achieving heat dissipation of the oil-cooled motor.
Currently, a mainstream heat dissipation for oil circuit uses an independent electronic oil pump for control. Independent control of the oil pump can better match an operating condition of the motor. In related technologies, when a vehicle speed changes, the operating condition of the motor changes accordingly, which requires a rotational speed of the oil pump to be changed correspondingly so as to meet a heat dissipation demand of the motor. However, this would lead to frequent changes in the rotational speed of the oil pump, which affects a service life of the oil pump. Therefore, how to ensure the service life of the oil pump is an urgent issue that needs to be addressed.

**SUMMARY**

By utilizing a control method and apparatus for a cooling oil pump of an oil-cooled motor, a device, and a medium according to one or more embodiments of the present disclosure, a vehicle is divided into multiple operating conditions based on a power interval in which a motor's loss heat power is located. Only when the power interval of the loss heat power changes does an operating condition of the vehicle change accordingly, and then it is necessary to control a rotational speed of the oil pump to change. The control process is simpler, and does not need a rotational speed of the oil pump to be frequently adjusted, thereby ensuring a service life of the oil pump.
In a first aspect, the present disclosure provides a control method for a cooling oil pump of an oil-cooled motor, including: acquiring a current loss heat power of the motor; determining a current operating condition of a vehicle according to a power interval in which the loss heat power is located, where different power intervals correspond to different operating conditions; determining a target temperature of a lubricating oil according to the current operating condition of the vehicle; determining a target flow rate of the oil pump according to the current operating condition of the vehicle, the current loss heat power of the motor, and the target temperature of the lubricating oil; and determining a target rotational speed of the oil pump according to the target flow rate of the oil pump.
In a second aspect, the present disclosure provides a control apparatus for a cooling oil pump of an oil-cooled motor, including: an acquiring module, configured to acquire a current loss heat power of the motor; an operating condition determining module, configured to determine a current operating condition of a vehicle according to a power interval in which the loss heat power is located, where different power intervals correspond to different operating conditions; a temperature determining module, configured to determine a target temperature of a lubricating oil according to the current operating condition of the vehicle; a flow rate determining module, configured to determine a target flow rate of the oil pump according to the current operating condition of the vehicle, the current loss heat power of the motor, and the target temperature of the lubricating oil; and a rotational speed determining module, configured to determine a target rotational speed of the oil pump according to the target flow rate of the oil pump.
In a third aspect, the present disclosure provides an electronic device, including: a memory and a processor, where the memory and the processor are communicatively connected to each other, the memory is stored with computer instructions, and the processor executes the control method as described in the first aspect by executing the computer instructions.
In a fourth aspect, the present disclosure provides a computer-readable storage medium, including computer instructions stored thereon, the computer instructions, when executed by a computer, causing the computer to implement the control method as described in the first aspect.
The above description is only an overview of technical solutions of the present disclosure. In order to understand technical means of the present disclosure more clearly to enable implementation according to the content of the specification and in order to make the above and other objects, features, and advantages of the present disclosure more obvious and understandable, specific implementations of the present disclosure are particularly given below.

**BRIEF DESCRIPTION OF DRAWINGS**

FIG. 1 shows a flowchart of a control method for a cooling oil pump of an oil-cooled motor according to some embodiments of the present disclosure.

FIG. 2 shows a flowchart of a control method for a cooling oil pump of an oil-cooled motor according to some other embodiments of the present disclosure.

FIG. 3 shows a relationship curve between a rotational speed of an electric drive and a rotational speed threshold of an oil pump according to some embodiments of the present disclosure.

FIG. 4 shows a flowchart of a control method for a cooling oil pump of an oil-cooled motor according to still some other embodiments of the present disclosure.

FIG. 5 shows a schematic diagram of a relationship curve between temperature and viscosity of a lubricating oil according to some embodiments of the present disclosure.

FIG. 6 shows a schematic diagram of a relationship curve between a temperature of a lubricating oil and a current of an oil pump according to some embodiments of the present disclosure.

FIG. 7 shows a structural block diagram of a control apparatus for a cooling oil pump of an oil-cooled motor according to some embodiments of the present disclosure.

**DESCRIPTION OF EMBODIMENTS**

To make objectives, technical solutions, and advantages of the present application clearer, implementations of the present application will be described in further detail below with reference to accompanying drawings.

Before a method for detecting hydrogen leakage of a fuel cell vehicle according to some embodiments of the present disclosure is described in detail, an implementation environment involved in the embodiments of the present disclosure will be briefly introduced.

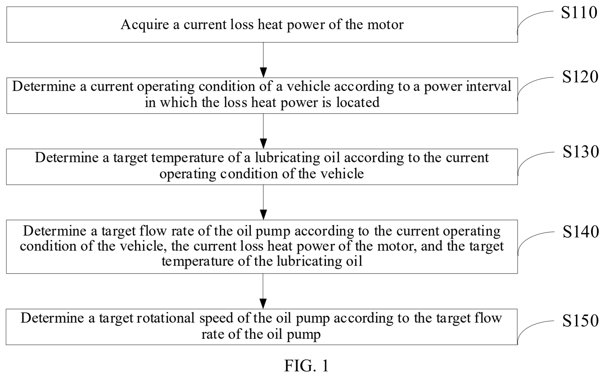

FIG. 1 is a flowchart of a control method for a cooling oil pump of an oil-cooled motor according to some embodiments of the present disclosure. As shown in FIG. 1, the control method includes steps S110 to S150.

In step S110, acquire a current loss heat power of the motor.

In some embodiments, the current loss heat power of the motor can be calculated according to the following formula (1):

$$\text{loss} = -\frac{(-)}{}; \qquad\qquad (1)$$

where $_{\text{loss}}$ represents the loss heat power, T represents a wheel-end torque, n represents a wheel-end rotational speed, $\theta$ represents efficiency at an electric drive efficiency map point. The wheel-end torque T, the wheel-end rotational speed n, and the efficiency $\theta$ at the electric drive efficiency map point can all be obtained by calibrating a direct-axis current id and a quadrature-axis current iq via a current loop, which is the prior art and will not be repeated here.

In step S120, determine a current operating condition of a vehicle according to a power interval in which the loss heat power is located.

In some embodiments, an operating condition includes a first operating condition, a second operating condition, and a third operating condition. Based on converting a vehicle's overall operating load spectrum to an electric drive load spectrum, it is divided into multi-condition operation modes to predict vehicle driving habits. In some embodiments, the first operating condition corresponds to a low load and can be an urban condition; the second operating condition corresponds to a medium load and can be a high-speed condition; the third operating condition corresponds to a high load and can be an extreme condition. A loss heat power of an electric drive is used as a marker for distinguishing operating conditions. In other embodiments, the operating condition can also be divided into more than three or less than three conditions according to actual needs, and the present disclosure has no limitation on this.

In some embodiments, step S 120 includes: when the loss heat power is less than or equal to a first power threshold, the loss heat power is in a first power interval, and it is determined that the current operating condition of the vehicle is the first operating condition; when the loss heat power is greater than the first power threshold and less than or equal to a second power threshold, the loss heat power is in a second power interval, and it is determined that the current operating condition of the vehicle is the second operating condition; and when the loss heat power is greater than the second power threshold, the loss heat power is in a third power interval, and it is determined that the current operating condition of the vehicle is the third operating condition.

In some embodiments, the first power threshold can be set to 3kW, and the second power threshold can be set to 7kW. When the loss heat power is less than or equal to 3kW, it is the first operating condition (low load); when the loss heat power is higher than 7kW, it is the third operating condition (high load); and when the loss heat power is between 3kW and 7kW, it is the second operating condition (medium load).

In step S130, determine a target temperature of a lubricating oil according to the current operating condition of the vehicle.

In some embodiments, the target temperature of the lubricating oil represents a temperature of the lubricating oil pumped out to a heat exchanger.

In some embodiments, step S130 includes: when the current operating condition of the vehicle is the first operating condition, it is determined that the target temperature of the lubricating oil is a first target oil temperature; when the current operating condition of the vehicle is the second operating condition, it is determined that the target temperature of the lubricating oil is a second target oil temperature; and when the current operating condition of the vehicle is the third operating condition, it is determined that the target temperature of the lubricating oil is a third target oil temperature.

In some embodiments, the first target oil temperature T1 is greater than an ideal lubricating oil temperature T0, the second target oil temperature T2 is equal to the ideal lubricating oil temperature T0, and the third target oil temperature T3 is less than the ideal lubricating oil temperature T0.

Exemplarily, the ideal lubricating oil temperature can be obtained through testing. For example, under a maximum allowable temperature environmental condition for the lubricating oil, performances of the lubricating oil such as an anti-scuffing capability and efficiency can be tested separately, and a temperature at which the best tested performance is obtained is used as the ideal lubricating oil temperature. For different types and different usage scenarios, the ideal lubricating oil temperature corresponding to the lubricating oil may vary. In some embodiments, the ideal lubricating oil temperature is 80-100°C.

In some embodiments, the control method may further include: determine a target temperature of a stator of the motor according to the current operating condition of the vehicle, and control a temperature of the stator of the motor to be within a range of the target temperature.

In some embodiments, when the current operating condition of the vehicle is the first operating condition, it is determined that the target temperature of the stator of the motor is a first target stator temperature; when the current operating condition of the vehicle is the second operating condition, it is determined that the target temperature of the stator of the motor is a second target stator temperature; and when the current operating condition of the vehicle is the third operating condition, it is determined that the target temperature of the stator of the motor is a third target stator temperature.

In some embodiments, the first target stator temperature M1 is greater than the second target stator temperature M2, the second target stator temperature M2 is greater than the third target stator temperature M3, the first target stator temperature M1 is less than a stator temperature threshold M0, and the stator temperature threshold M0 is 150°C.

In some embodiments, a setting of the target temperature of the stator of the motor is similar to the setting of the target temperature of the lubricating oil. Only when both are within the allowable ranges, the electric drive can operate stably.

Step S140: determine a target flow rate of the oil pump according to the current operating condition of the vehicle, the current loss heat power of the motor, and the target temperature of the lubricating oil.

In some embodiments, step S140 may include:

when the current operating condition of the vehicle is the first operating condition or the second operating condition, calculate the target flow rate of the oil pump according to the following formulas (2)-(4):

$$q = (k * P_{loss}) / [\rho_{lubricating\ oil}(T'_{oil\ inlet} - T_{oil\ outlet})]; \qquad (2)$$

$$T_{oil\ outlet} = T_{water\ outlet}; \qquad (3)$$

$$T_{water\ outlet} = [(k * P_{loss}) / (\rho_{cooling\ water} * q_{cooling\ water})] + T_{water\ inlet}; \qquad (4)$$

where q represents the target flow rate of the oil pump, $P_{loss}$ represents the current loss heat power of the motor, k represents a safety coefficient and k is a constant of greater than 1, $\rho_{lubricating\ oil}$ represents a density of the lubricating oil, $T_{oil\ inlet}'$, $T_{oil\ outlet})$ $T_{water\ outlet})$ $T_{water\ inlet}'$ respectively represent a target temperature of an oil inlet, a temperature of an oil outlet, a temperature of a water outlet, and a temperature of a water inlet, of a heat exchanger, the target temperature $T_{oil\ inlet}'$ of the oil inlet equals to the target temperature of the lubricating oil, $\rho_{cooling\ water}$ represents a density of a cooling water, and $q_{cooling\ water}$ represents a flow rate of the cooling water.

In some embodiments, the heat exchanger has four ports, which are respectively the oil inlet, the oil outlet, the water inlet, and the water outlet. The lubricating oil pumped out by the oil pump enters the heat exchanger through the oil inlet. Therefore, the target temperature oil inlet' of the oil inlet equals to the target temperature of the lubricating oil. water inlet is usually set to a temperature of the water inlet under the third operating condition, generally 65°C. k=1-1.5, which can be set according to actual needs. Therefore, in the above formula (2), loss, k, lubricating oil, oil inlet' are all known quantities, and the temperature oil outlet can be calculated according to formula (3) and formula (4). Therefore, the target flow rate q of the oil pump can ultimately be calculated.

When the current operating condition of the vehicle is the first operating condition, a corresponding target temperature oil inlet' of the oil inlet is T1, and a corresponding target flow rate q1 of the oil pump can be calculated at this time. When the current operating condition of the vehicle is the second operating condition, the corresponding target temperature oil inlet' of the oil inlet is T2, and a corresponding target flow rate q2 of the oil pump can be calculated at this time.

In some embodiments, the third operating condition accounts for an extremely small proportion in actual vehicle use, with short running time, mostly being starting at full power and high-speed overtaking driving conditions. At the same time, a loss in the third operating condition mostly exceeds the vehicle's heat dissipation capacity. Therefore, for the third operating condition, a short-time working system may be adopted. For example, a peak power of the electric drive is only required to work for 1 minute. According to a definition of a product usage scenario, a minimum flow rate required by the oil pump under the third operating condition for the vehicle can be determined through testing, which is a target flow rate q3 of the oil pump. In some embodiments, the electric drive can be controlled to work at the peak power for different time periods, and then flow rates required by the oil pump at the target temperature of the lubricating oil and the target temperature of the stator can be tested, respectively.

Step S150: determine a target rotational speed of the oil pump according to the target flow rate of the oil pump.

In some embodiments, step S150 includes: calculate the target rotational speed of the oil pump according to the following formula (5):

$$\text{oil pump} = \frac{}{\text{displacement}};\qquad\qquad (5)$$

where oil pump represents the target rotational speed of the oil pump, q represents the target flow rate of the oil pump, represents a volumetric efficiency of the oil pump, displacement represents a maximum displacement of the oil pump itself. In the above formula (5), q can be calculated according to step S140, can be obtained through measurement, and displacement is a known quantity.

In the above control method, the current operating condition of the vehicle is determined by acquiring the current loss heat power of the motor. After determining the current operating condition of the vehicle, by determining the target temperature of the lubricating oil corresponding to this operating condition and then combining the loss heat power under this operating condition, the target flow rate of the oil pump can be determined, thereby determining the target rotational speed of the oil pump corresponding to this operating condition. Using this control method enables precise control of the rotational speed of the oil pump under the temperature control target for lubricating oil, meets a heat dissipation demand of the motor and ensures an operation of the entire motor in a high-efficiency state. At the same time, the rotational speed of the oil pump is controlled to change only when the operating condition of the vehicle changes. Moreover, the operating condition only involves three conditions: the first operating condition, the second operating condition, and the third operating condition, with simple control, without need to frequently adjust rotational speed of the oil pump, thereby ensuring a service life of the oil pump.

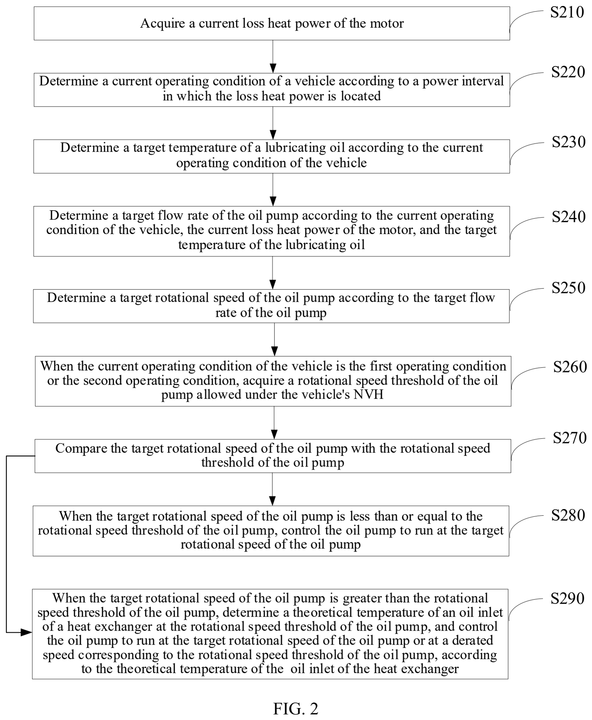

An embodiment of the present disclosure also provides another control method for a cooling oil pump of an oil-cooled motor. FIG. 2 is a flowchart of another control method for a cooling oil pump of an oil-cooled motor according to some embodiments of the present disclosure. As shown in FIG. 2, the control method includes steps S210 to S290.

Step S210: acquire a current loss heat power of the motor.

Step S220: determine a current operating condition of a vehicle according to a power interval in which the loss heat power is located.

In some embodiments, an operating condition includes a first operating condition, a second operating condition, and a third operating condition.

Step S230: determine a target temperature of a lubricating oil according to the current operating condition of the vehicle.

Step S240: determine a target flow rate of the oil pump according to the current operating condition of the vehicle, the current loss heat power of the motor, and the target temperature of the lubricating oil.

Step S250: determine a target rotational speed of the oil pump according to the target flow rate of the oil pump.

The above steps S210 to S250 are the same as steps S110 to S150 in the above-mentioned embodiment. For details, reference may be made to the relevant description of steps S110 to S150, which will not be repeated here.

Step S260: when the current operating condition of the vehicle is the first operating condition or the second operating condition, acquire a rotational speed threshold of the oil pump allowed under the vehicle's NVH.

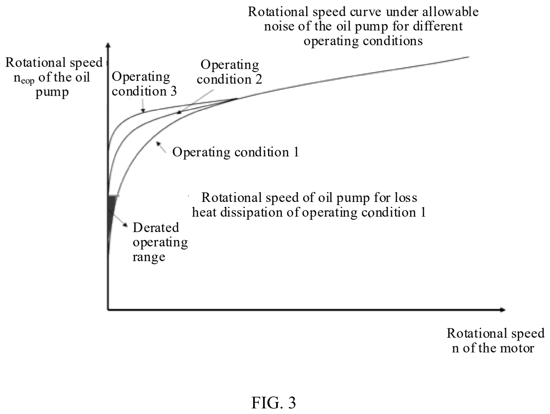

Since the oil pump itself is a rotating part and would produce certain radiation noise, it is necessary to determine that the rotational speed of the oil pump is within an allowable noise boundary during the operation process of the entire vehicle. In some embodiments, the rotational speed of the oil pump at a maximum constant-speed noise under different rotational speeds and different torques of the electric drive can be tested through a NVH (Noise, Vibration, and Harshness) test device. Finally, a relationship curve between a rotational speed n of a motor of the electric drive and a rotational speed threshold $n_{noise}$ of the oil pump under NVH is obtained. As shown in FIG. 3, since at high speeds, the vehicle's tire noise and wind noise dominate, and the contribution of the rotational speed of the oil pump is small, three operating condition curves can be merged into one curve. However, at low speeds, the vehicle's wind noise and tire noise are small. In this case, $n_{noise}$ needs to be distinguished in combination with the operating condition. Under the third operating condition (operating condition 3 in FIG. 3), the load is higher, and the electric drive noise dominates at this time, so $n_{noise}$ would be higher; under the first operating condition (operating condition 1 in FIG. 3), the load is lower, and the contribution of electric drive noise is reduced, so $n_{noise}$ would be lower. Under the second operating condition (operating condition 2 in FIG. 3), the load is between the loads of the third and first operating conditions, and the corresponding $n_{noise}$ is between values of $n_{noise}$ of the third and first operating conditions.

Therefore, through the relationship curve shown in FIG. 3, a corresponding rotational speed threshold $n_{noise}$ of the oil pump under the current operating condition of the vehicle and the current rotational speed of the electric drive can be determined.

It should be noted that in some embodiments, when the current operating condition of the vehicle is the third operating condition, the oil pump is still controlled to run at the target rotational speed $n_{oil\ pump}$ of the oil pump.

Step S270: compare the target rotational speed of the oil pump with the rotational speed threshold of the oil pump.

In some embodiments, when the target rotational speed of the oil pump is less than or equal to the rotational speed threshold of the oil pump, i.e., $n_{oil\ pump} \leq n_{noise}$, it means a rotational speed for heat dissipation is within a maximum noise allowed rotational speed. At this time, step S280 can be further performed. Conversely, when the target rotational speed of the oil pump is greater than the rotational speed threshold of the oil pump, i.e., $n_{oil\ pump} > n_{noise}$, it means the rotational speed for heat dissipation exceeds the maximum noise allowed rotational speed, and the execution of the $n_{oil\ pump}$ instruction may cause the noise quality in a vehicle cabin to deteriorate. At this time, step S290 can be further performed.

Step S280: when the target rotational speed of the oil pump is less than or equal to the rotational speed threshold of the oil pump, control the oil pump to run at the target rotational speed of the oil pump.

Step S290: when the target rotational speed of the oil pump is greater than the rotational speed threshold of the oil pump, determine a theoretical temperature of an oil inlet of a heat exchanger under the rotational speed threshold of the oil pump, and control the oil pump to run at the target rotational speed of the oil pump or at a derated speed corresponding to the rotational speed threshold of the oil pump, according to the theoretical temperature of the oil inlet of the heat exchanger.

In some embodiments, the theoretical temperature oil inlet" of the oil inlet of the heat exchanger under the rotational speed threshold $n_{noise}$ of the oil pump can be determined according to the following formulas (6) to (8) and formula (4):

$$oil\ inlet'' = [(k * {loss})/({lubricating\ oil} * ')] + {oil\ outlet}; \qquad (6)$$

$$' = {noise} * * {displacement}; \qquad (7)$$

$$oil\ outlet = {water\ outlet}; \qquad (8)$$

$$water\ outlet = [(k * {loss})/({cooling\ water} * {cooling\ water})] + {water\ inlet}. \qquad (4)$$

In some embodiments, step S290 may include: compare the theoretical temperature $T_{oil\ inlet}$" of the oil inlet of the heat exchanger with a temperature threshold $T_{threshold}$; when the theoretical temperature $T_{oil\ inlet}$" of the oil inlet of the heat exchanger is less than or equal to the temperature threshold $T_{threshold}$, control the oil pump to run at the rotational speed threshold $n_{noise}$ of the oil pump; and when the theoretical temperature $T_{oil\ inlet}$" of the oil inlet of the heat exchanger is greater than the temperature threshold $T_{threshold}$, control the oil pump to run at the target rotational speed $n_{oil\ pump}$ of the oil pump.

Where $T_{threshold}$ can be set according to actual needs. For different types of lubricating oils, $T_{threshold}$ can be set differently. In some embodiments, $T_{threshold}$ can be set to 130°C. When $T_{oil\ inlet}$" $\leq T_{threshold}$, it means that when the rotational speed of the oil pump is $n_{noise}$, the temperature of the lubricating oil will not overheat and at this time, the oil pump can be controlled to run at the rotational speed threshold $n_{noise}$ of the oil pump. When $T_{oil\ inlet}" > T_{threshold}$, it means that when the rotational speed of the oil pump is $n_{noise}$, the temperature of the lubricating oil will overheat, and at this time the derated operation is not allowed, and the oil pump can be controlled to run at the target rotational speed $n_{oil\ pump}$ of the oil pump.

In the above control method, the rotational speed of the oil pump is controlled in combination with the overall vehicle's NVH performance to ensure the noise quality inside the vehicle cabin.

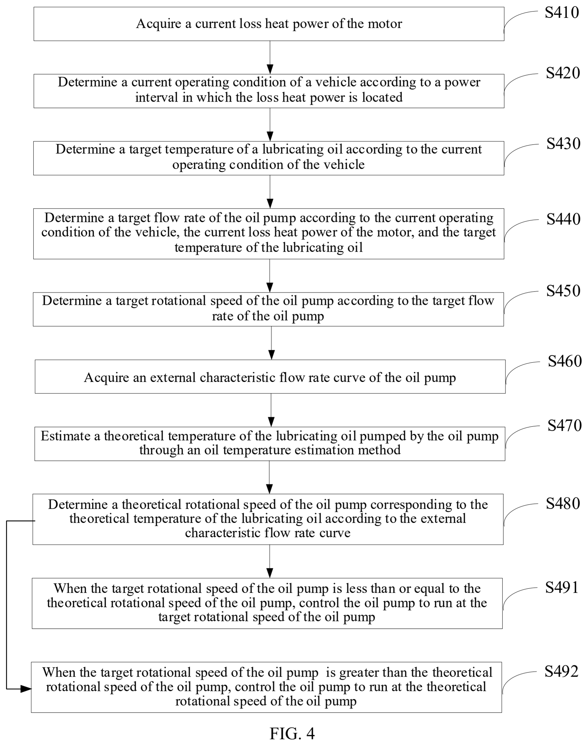

An embodiment of the present disclosure also provides yet another control method for a cooling oil pump of an oil-cooled motor. FIG. 4 is a flowchart of yet another control method for a cooling oil pump of an oil-cooled motor according to some embodiments of the present disclosure. As shown in FIG. 4, the control method includes steps S410 to step S492.

Step S410: acquire a current loss heat power of a motor.

Step S420: determine a current operating condition of a vehicle according to a power interval in which the loss heat power is located.

In some embodiments, an operating condition includes a first operating condition, a second operating condition, and a third operating condition.

Step S430: determine a target temperature of a lubricating oil according to the current operating condition of the vehicle.

Step S440: determine a target flow rate of the oil pump according to the current operating condition of the vehicle, the current loss heat power of the motor, and the target temperature of the lubricating oil.

Step S450: determine a target rotational speed of the oil pump according to the target flow rate of the oil pump.

The above steps S410 to S450 are the same as steps S110 to S150 in the above embodiment. For details, reference may be made to the relevant description of steps S110 to S150, which will not be repeated here.

Step S460: acquire an external characteristic flow rate curve of the oil pump.

In some embodiments, the external characteristic flow rate curve of the oil pump is a relationship curve between a temperature of the lubricating oil pumped out by the oil pump and a maximum rotational speed of the oil pump. This external characteristic flow rate curve can be provided by the manufacturer or obtained through testing, which is not limited here.

Step S470: estimate a theoretical temperature of the lubricating oil pumped out by the oil pump through an oil temperature estimation method.

Since a viscosity of a lubricating oil changes inversely with the temperature of the lubricating oil, and the viscosity of the lubricating oil is directly reflected in the load of the oil pump, there is a certain mapping relationship between the load of the oil pump and the temperature of the lubricating oil. Particularly, since the viscosity of the lubricating oil changes little after the temperature of the lubricating oil exceeds a certain threshold, an influence of the viscosity of the lubricating oil on the load of the oil pump can be amplified by increasing the rotational speed of the oil pump. Synchronously, during control, after intermittently increasing the rotational speed of the oil pump, the temperature of the lubricating oil can be reflected according to a direct current of the oil pump. The relationship between the temperature T of the lubricating oil and the current I of the oil pump can be determined through bench calibration.

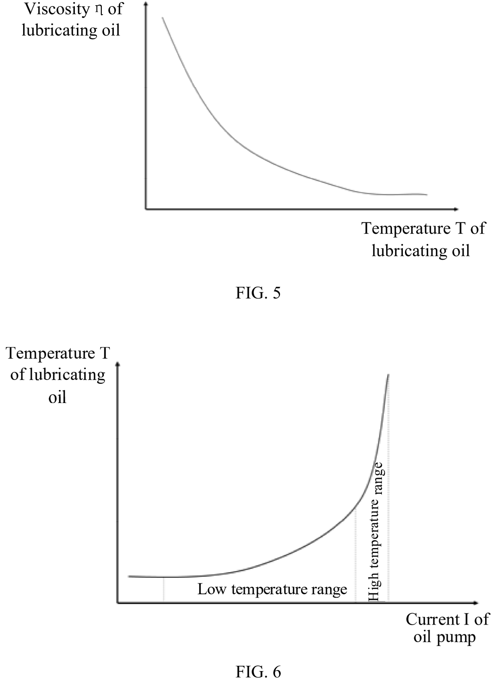

FIG. 5 is a schematic diagram of a relationship curve between temperature of and viscosity of lubricating oil according to some embodiments of the present disclosure. As shown in FIG. 5, the higher the temperature T of the lubricating oil, the smaller the corresponding viscosity $\eta$ of the lubricating oil. Moreover, after the temperature T of the lubricating oil is higher than a certain threshold, the viscosity $\eta$ of the lubricating oil tends to be stable.

FIG. 6 is a schematic diagram of a relationship curve between a temperature of a lubricating oil and a current of an oil pump according to some embodiments of the present disclosure. As shown in FIG. 6, the higher the temperature T of the lubricating oil, the greater the current I of the oil pump. Moreover, a variation of the current I of the oil pump in a high-temperature range is greater than a variation in a low-temperature range.

The oil temperature estimation method utilizes the inherent characteristic of the viscosity of the lubricating oil and the current-load characteristic of the oil pump to calibrate oil temperature curves as shown in FIG. 5 and FIG. 6. Through these oil temperature curves, the temperature T of the lubricating oil at the corresponding viscosity $\eta$ of the lubricating oil or the current I of the oil pump can be estimated.

By this method, an oil temperature sensor can be saved, thereby reducing the cost. Since the estimated oil temperature has a certain deviation, when a stator temperature sensor of a motor is normal, the estimated oil temperature can also serve as a warning. For example, when the estimated oil temperature > (an oil temperature threshold / a safety coefficient), it is treated as oil temperature over-temperature, and the rotational speed of the oil pump is directly adjusted to a maximum rotational speed value of the external characteristic until the estimated oil temperature returns to a normal range. When the stator temperature sensor of the motor fails, the estimated oil temperature can also serve as the replacement of the stator temperature sensor, thereby achieving redundant control under a failure condition of the temperature sensor of the motor. Finally, the oil temperature estimation can determine a maximum external characteristic flow rate of the oil pump itself by combing with the characteristics of the oil pump itself, thereby enabling more precise control of the load of the oil pump within a reasonable range.

Step S480: determine a theoretical rotational speed of the oil pump corresponding to the theoretical temperature of the lubricating oil according to the external characteristic flow rate curve.

In some embodiments, after determining the theoretical temperature $T_{theory}$ of the lubricating oil according to the oil temperature estimation method, the theoretical rotational speed $n_{theory}$ of the oil pump corresponding to $T_{theory}$ can be determined according to the external characteristic flow rate curve.

Further, the theoretical rotational speed $n_{theory}$ of the oil pump can be compared with the target rotational speed $n_{oil\ pump}$ of the oil pump. When $n_{oil\ pump} \leq n_{theory}$, step S491 can be further performed; conversely, when $n_{oil\ pump} > n_{theory}$, step S492 can be further performed.

Step S491: when the target rotational speed of the oil pump is less than or equal to the theoretical rotational speed of the oil pump, control the oil pump to run at the target rotational speed of the oil pump.

Step S492: when the target rotational speed of the oil pump is greater than the theoretical rotational speed of the oil pump, control the oil pump to run at the theoretical rotational speed of the oil pump.

In some embodiments, the control method may further include: during an operation of the oil pump, if a stator temperature of the motor or a temperature of the lubricating oil is abnormal, control the oil pump to run at the theoretical rotational speed of the oil pump.

Specifically, the temperature of the lubricating oil can be obtained through the above-mentioned oil temperature estimation method, that is, the theoretical temperature $T_{theory}$ of the lubricating oil pumped out by the oil pump can be estimated by the oil temperature estimation method. When $T_{theory} > T_{threshold}$, it means that the temperature of the lubricating oil is abnormal. When the stator temperature M of the motor exceeds a stator temperature threshold M0, i.e., M > M0, it means that the stator temperature of the motor is abnormal.

In some embodiments, $T_{threshold}$ can be set to 130°C, and M0 is 150°C.

In the above-mentioned control method, the maximum external characteristic flow rate of the oil pump itself is determined by estimating the oil temperature and combining the characteristic of the oil pump itself, thereby enabling more precise control of the load of the oil pump within a reasonable range.

It should be noted that in the above embodiments, according to the control method provided by the embodiment of FIG. 2, it can be determined whether the rotational speed of the oil pump is finally controlled according to $n_{oil\ pump}$ or $n_{noise}$ instruction. According to the control method provided by the embodiment of FIG. 4, it can be determined whether the rotational speed of the oil pump is finally controlled according to $n_{oil\ pump}$ or $n_{theory}$ instruction. In an implementation of the present disclosure, the control methods provided by the embodiments of FIGS. 2 and 4 can also be combined. For example, when it is determined according to the control method provided by the embodiment of FIG. 2 that the rotational speed of the oil pump is controlled according to the $n_{oil\ pump}$ instruction, the control method shown in FIG. 4 can be further executed to determine whether a final rotational speed instruction output by the oil pump is $n_{oil\ pump}$ or $n_{theory}$. Alternatively, when it is determined according to the control method provided by the embodiment of FIG. 4 that the rotational speed of the oil pump speed is controlled according to the $n_{oil\ pump}$ instruction, the control method shown in FIG. 2 can be further executed to determine whether the final rotational speed instruction output by the oil pump is $n_{oil\ pump}$ or $n_{noise}$. In another implementation of the present disclosure, the control methods provided by FIGS. 2 and 4 can also be executed simultaneously. When final instructions for the rotational speed of the oil pump obtained by simultaneously executing the control methods of FIGS. 2 and 4 are different, for example, $n_{noise}$ and $n_{theory}$ respectively, the smaller value of them can be selected as the final rotational speed instruction output by the oil pump.

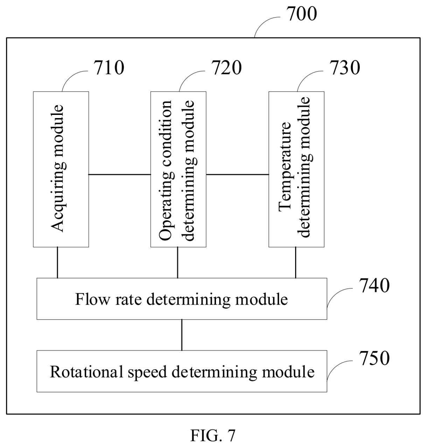

Based on the same inventive concept, an embodiment of the present disclosure also provides a control apparatus for a cooling oil pump of an oil-cooled motor. FIG. 7 is a structural block diagram of a control apparatus for a cooling oil pump of an oil-cooled motor according to some embodiments of the present disclosure. As shown in FIG. 7, the control apparatus 700 includes an acquiring module 710, an operating condition determining module 720, a temperature determining module 730, a flow rate determining module 740, and a rotational speed determining module 750. The acquiring module 710 is configured to acquire a current loss heat power of the motor. The operating condition determining module 720 is configured to determine a current operating condition of a vehicle according to a power interval in which the loss heat power is located, where the operating condition includes a first operating condition, a second operating condition, and a third operating condition. The temperature determining module 730 is configured to determine a target temperature of a lubricating oil according to the current operating condition of the vehicle. The flow rate determining module 740 is configured to determine a target flow rate of the oil pump according to the current operating condition of the vehicle, the current loss heat power of the motor, and the target temperature of the lubricating oil. The rotational speed determining module 750 is configured to determine a target rotational speed of the oil pump according to the target flow rate of the oil pump.

In some embodiments, the operating condition determining module 720 is further configured to: when the loss heat power is less than or equal to a first power threshold, the loss heat power is in a first power interval, determine the current operating condition of the vehicle as the first operating condition; when the loss heat power is greater than the first power threshold and less than or equal to a second power threshold, the loss heat power is in a second power interval, determine the current operating condition of the vehicle as the second operating condition; and when the loss heat power is greater than the second power threshold, the loss heat power is in a third power interval, determine the current operating condition of the vehicle as the third operating condition.

In some embodiments, the temperature determining module 730 is further configured to: when the current operating condition of the vehicle is the first operating condition, determine the target temperature of the lubricating oil as a first target oil temperature; when the current operating condition of the vehicle is the second operating condition, determine the target temperature of the lubricating oil as a second target oil temperature; and when the current operating condition of the vehicle is the third operating condition, determine the target temperature of the lubricating oil as a third target oil temperature; where the first target oil temperature is greater than an ideal lubricating oil temperature, the second target oil temperature is equal to the ideal lubricating oil temperature, and the third target oil temperature is less than the ideal lubricating oil temperature.

In some embodiments, the flow rate determining module 740 is further configured to: when the current operating condition of the vehicle is the first operating condition or the second operating condition, calculate the target flow rate of the oil pump according to the following formulas:

$$q = (k * P_{loss}) / [\rho_{lubricating\ oil}(T'_{oil\ inlet} - T_{oil\ outlet})];$$

$$T_{oil\ outlet} = T_{water\ outlet};$$

$$T_{water\ outlet} = [(k * P_{loss}) / (\rho_{cooling\ water} * q_{cooling\ water})] + T_{water\ inlet};$$

where q represents the target flow rate of the oil pump, $P_{loss}$ represents the current loss heat power of the motor, k represents a safety coefficient and k is a constant of greater than 1, $\rho_{lubricating\ oil}$ represents a density of the lubricating oil, $T'_{oil\ inlet}$, $T_{oil\ outlet}$, $T_{water\ outlet}$, $T_{water\ inlet}$ respectively represent a target temperature of an oil inlet, a temperature of an oil outlet, a temperature of a water outlet, and a temperature of a water inlet, of a heat exchanger, the target temperature $T_{oil\ inlet}$ of the oil inlet equals to the target temperature of the lubricating oil, $\rho_{cooling\ water}$ represents a density of a cooling water, $q_{cooling\ water}$ represents a flow rate of the cooling water.

In some embodiments, the control apparatus 700 further includes an oil pump rotational speed controlling module, configured to: when the current operating condition of the vehicle is the first operating condition or the second operating condition, acquire the a rotational speed threshold of the oil pump allowed under noise, vibration, and harshness of the vehicle; compare the target rotational speed of the oil pump with the rotational speed threshold of the oil pump; when the target rotational speed of the oil pump is less than or equal to the rotational speed threshold of the oil pump, control the oil pump to run at the target rotational speed of the oil pump; when the target rotational speed of the oil pump is greater than the rotational speed threshold of the oil pump, determine a theoretical temperature of an oil inlet of a heat exchanger at the rotational speed threshold of the oil pump; control the oil pump to run at the target rotational speed of the oil pump or at a derated speed corresponding to the rotational speed threshold of the oil pump, according to the theoretical temperature of the oil inlet of the heat exchanger.

In some embodiments, the oil pump rotational speed controlling module is further configured to: acquire an external characteristic flow rate curve of the oil pump, where the external characteristic flow rate curve of the oil pump is a relationship curve between a temperature of the lubricating oil pumped out by the oil pump and a rotational speed of the oil pump; estimate a theoretical temperature of the lubricating oil pumped out by the oil pump through an oil temperature estimation method; determine a theoretical rotational speed of the oil pump corresponding to the theoretical temperature of the lubricating oil according to the external characteristic flow rate curve; when the target rotational speed of the oil pump is less than or equal to the theoretical rotational speed of the oil pump, control the oil pump to run at the target rotational speed of the oil pump; and when the target rotational speed of the oil pump is greater than the theoretical rotational speed of the oil pump, control the oil pump to run at the theoretical rotational speed of the oil pump.

In some embodiments, the oil pump rotational speed controlling module is further configured to: during an operation of the oil pump, if a stator temperature of the motor or the temperature of the lubricating oil is abnormal, control the oil pump to run at the theoretical rotational speed of the oil pump.

It can be understood that the control apparatus provided in the above-mentioned embodiments is only described by way of example with the division of the above-mentioned functional modules. In practical applications, the above functions can be assigned to different functional modules to be completed according to needs, that is, an internal structure of the control apparatus is divided into different functional modules to complete all or part of the functions described above.

An embodiment of the present disclosure also provides an electronic device. The electronic device may include a processor and a memory, where the processor and the memory may be communicatively connected to each other via a bus or other manners.

The processor may be a central processing unit (Central Processing Unit, CPU), or an application specific integrated circuit (Application Specific Integrated Circuit, ASIC), or may be configured as one or more integrated circuits that implement the embodiments of the present application.

The memory may include a mass storage for data or instructions. By way of example and not limitation, the memory may include a hard disk drive (Hard Disk Drive, HDD), a floppy disk drive, a flash memory, an optical disc, a magneto-optical disc, a magnetic tape, or a universal serial bus (Universal Serial Bus, USB) drive, or a combination of two or more of the above. Where appropriate, the memory may include removable or non-removable (or fixed) media. Where appropriate, the memory may be internal or external to the electronic device. In specific embodiments, the memory may be a non-volatile solid-state memory.

In an example, the memory may be a read only memory (Read Only Memory, ROM). In an example, the ROM may be a mask-programmed ROM, a programmable ROM (PROM), an erasable PROM (EPROM), an electrically erasable PROM (EEPROM), an electrically alterable ROM (EAROM), or a flash memory, or a combination of two or more of these.

The processor implements any one of the control methods described in the above embodiments by reading and executing the computer program instructions stored in the memory.

In an example, the electronic device may further include a communication interface and a bus. Where, the processor, the memory, and the communication interface are connected and complete communication with each other via the bus. The communication interface is mainly used for implementing communication between respective modules, apparatuses, units, and/or devices in the embodiments of the present application. Where appropriate, the bus may include one or more buses.

Additionally, in conjunction with the control method in the above embodiments, the embodiments of the present disclosure may provide a computer-readable storage medium for implementation of the control method. Computer instructions are stored on the computer-readable storage medium; and the computer instructions, when executed by a computer, cause the computer to implement any one of the control methods described in the above embodiments.

The technical solutions in the above embodiments of the present application have at least the following technical effects or advantages.

According to the control method and apparatus for a cooling oil pump of an oil-cooled motor, the device, and the medium in some embodiments of the present disclosure, the current operating condition of the vehicle is determined by acquiring the power interval in which the current loss heat power of the motor is located. After determining the current operating condition of the vehicle, by determining the target temperature of the lubricating oil corresponding to this operating condition and then combining the loss heat power under this operating condition, the target flow rate of the oil pump can be determined, thereby determining the target rotational speed of the oil pump corresponding to this operating condition. Using this control method enables precise control of the rotational speed of the oil pump under the temperature control target for the lubricating oil, meets a heat dissipation demand of the motor and ensures an operation of the entire motor in a high-efficiency state. At the same time, the operating condition is divided and determined according to the power interval in which the loss heat power is located. Only when the power interval in which the loss heat power is located changes, does the vehicle operating condition change accordingly, and then it is necessary to control the rotational speed of the oil pump to change. The control process is simpler, and does not require the rotational speed of the oil pump to be frequently adjusted, thereby ensuring the service life of the oil pump.

Numerous specific details are set forth in the description provided herein. However, it is to be understood that, the embodiments of the present disclosure may be practiced without these specific details. In some examples, well-known methods, structures, and techniques have not been shown in detail in order not to obscure an understanding of this description.

Similarly, it is to be understood that in the above description of exemplary embodiments of the present disclosure, various features of the present disclosure are sometimes grouped together into a single embodiment, figure, or description thereof for the purpose of simplify the present disclosure and aiding in the understanding of one or more of the various inventive aspects. However, the method of the present disclosure is not to be interpreted as reflecting such intention that the claimed disclosure requires more features than those expressly recited in each claim. Rather, as reflected in the claims, inventive aspects lie in less than all features of a single foregoing disclosed embodiment. Thus, the claims following the detailed description are hereby expressly incorporated into this detailed description, with each claim standing on its own as a separate embodiment of the present disclosure.

It is to be noted that the above-described embodiments illustrate rather than limit the present disclosure, and that those skilled in the art will be able to design alternative embodiments without departing from the scope of the appended claims. In the claims, any reference signs placed in parentheses shall not be construed as limiting the claim. The word "include" does not exclude the presence of elements or steps not listed in a claim. The word "a" or "an" preceding an element does not exclude the presence of a plurality of such elements. The present disclosure can be implemented by means of hardware including several distinct elements and by means of a suitably programmed computer. In a unit claim enumerating several means, several of these means can be embodied by one and the same item of hardware. The use of the words first, second, and third, etc., does not indicate any order. These words are to be interpreted as names.

**Claims**

1. A control method for a cooling oil pump of an oil-cooled motor, comprising:

   acquiring a current loss heat power of the motor;
   determining a current operating condition of a vehicle according to a power interval in which the loss heat power is located, wherein different power intervals correspond to different operating conditions;
   determining a target temperature of a lubricating oil according to the current operating condition of the vehicle;
   determining a target flow rate of the oil pump according to the current operating condition of the vehicle, the current loss heat power of the motor, and the target temperature of the lubricating oil; and
   determining a target rotational speed of the oil pump according to the target flow rate of the oil pump.

2. The control method according to claim 1, wherein determining the current operating condition of the vehicle according to the power interval in which the loss heat power is located comprises:

   when the loss heat power is less than or equal to a first power threshold, the loss heat power is in a first power interval, determining the current operating condition of the vehicle as a first operating condition;
   when the loss heat power is greater than the first power threshold and less than or equal to a second power threshold, the loss heat power is in a second power interval, determining the current operating condition of the vehicle as a second operating condition; and
   when the loss heat power is greater than the second power threshold, the loss heat power is in a third power interval, determining the current operating condition of the vehicle as a third operating condition.

3. The control method according to claim 2, wherein determining the target temperature of the lubricating oil according to the current operating condition of the vehicle comprises:

   when the current operating condition of the vehicle is the first operating condition, determining the target temperature of the lubricating oil as a first target oil temperature;
   when the current operating condition of the vehicle is the second operating condition, determining the target temperature of the lubricating oil as a second target oil temperature; and
   when the current operating condition of the vehicle is the third operating condition, determining the target temperature of the lubricating oil as a third target oil temperature;
   wherein the first target oil temperature is greater than an ideal lubricating oil temperature, the second target oil temperature is equal to the ideal lubricating oil temperature, and the third target oil temperature is less than the ideal lubricating oil temperature.

4. The control method according to claim 2, wherein determining the target flow rate of the oil pump according to the current operating condition of the vehicle, the current loss heat power of the motor and the target temperature of the lubricating oil, comprises:

   when the current operating condition of the vehicle is the first operating condition or the second operating condition, calculating the target flow rate of the oil pump according to the following formulas:

$$q = (k * P_{loss}) / [\rho_{lubricating\ oil}(T'_{oil\ inlet} - T_{oil\ outlet})];$$

$$T_{oil\ outlet} = T_{water\ outlet};$$

$$T_{water\ outlet} = [(k * P_{loss})/(\rho_{cooling\ water} * q_{cooling\ water})] + T_{water\ inlet};$$

   wherein q represents the target flow rate of the oil pump, $P_{loss}$ represents the current loss heat power of the motor, k represents a safety coefficient and k is a constant of greater than 1, lubricating oil represents a density of the lubricating oil, oil inlet', oil outlet, water outlet, water inlet respectively represent a target temperature of an oil inlet, a temperature of an oil outlet, a temperature of a water outlet, and a temperature of a water inlet, of a heat exchanger, the target temperature oil inlet' of the oil inlet equals to the target temperature of the lubricating oil, cooling water represents a density of a cooling water, and cooling water represents a flow rate of the cooling water.

**5.** The control method according to claim 2, wherein after determining the target rotational speed of the oil pump, the control method further comprises:

when the current operating condition of the vehicle is the first operating condition or the second operating condition, acquiring a rotational speed threshold of the oil pump allowed under noise, vibration, and harshness of the vehicle;

comparing the target rotational speed of the oil pump with the rotational speed threshold of the oil pump;

when the target rotational speed of the oil pump is less than or equal to the rotational speed threshold of the oil pump, controlling the oil pump to run at the target rotational speed of the oil pump; and

when the target rotational speed of the oil pump is greater than the rotational speed threshold of the oil pump, determining a theoretical temperature of an oil inlet of a heat exchanger at the rotational speed threshold of the oil pump, and controlling the oil pump to run at the target rotational speed of the oil pump or at a derated speed corresponding to the rotational speed threshold of the oil pump, according to the theoretical temperature of the oil inlet of the heat exchanger.

**6.** The control method according to claim 1, further comprising:

acquiring an external characteristic flow rate curve of the oil pump, wherein the external characteristic flow rate curve of the oil pump is a relationship curve between a temperature of the lubricating oil pumped out by the oil pump and a maximum rotational speed of the oil pump;

estimating a theoretical temperature of the lubricating oil pumped out by the oil pump through an oil temperature estimation method;

determining a theoretical rotational speed of the oil pump corresponding to the theoretical temperature of the lubricating oil according to the external characteristic flow rate curve;

when the target rotational speed of the oil pump is less than or equal to the theoretical rotational speed of the oil pump, controlling the oil pump to run at the target rotational speed of the oil pump; and

when the target rotational speed of the oil pump is greater than the theoretical rotational speed of the oil pump, controlling the oil pump to run at the theoretical rotational speed of the oil pump.

**7.** The control method according to claim 6, further comprising:
during an operation of the oil pump, if a temperature of a stator of the motor or the temperature of the lubricating oil is abnormal, controlling the oil pump to run at the theoretical rotational speed of the oil pump.

**8.** A control apparatus for a cooling oil pump of an oil-cooled motor, comprising:

an acquiring module, configured to acquire a current loss heat power of the motor;

an operating condition determining module, configured to determine a current operating condition of a vehicle according to a power interval in which the loss heat power is located, wherein different power intervals correspond to different operating conditions;

a temperature determining module, configured to determine a target temperature of a lubricating oil according to the current operating condition of the vehicle;

a flow rate determining module, configured to determine a target flow rate of the oil pump according to the current operating condition of the vehicle, the current loss heat power of the motor, and the target temperature of the lubricating oil; and

a rotational speed determining module, configured to determine a target rotational speed of the oil pump according to the target flow rate of the oil pump.

**9.** An electronic device, comprising: a memory and a processor, wherein the memory and the processor are communicatively connected to each other, the memory is stored with computer instructions, and the processor executes the control method according to any one of claims 1 to 7 by executing the computer instructions.

**10.** A computer-readable storage medium, comprising computer instructions stored thereon, the computer instructions, when executed by a computer, causing the computer to implement the control method according to any one of claims 1 to 7.

| Acquire a current loss heat power of the motor | S110 |

↓

| Determine a current operating condition of a vehicle according to a power interval in which the loss heat power is located | S120 |

↓

| Determine a target temperature of a lubricating oil according to the current operating condition of the vehicle | S130 |

↓

| Determine a target flow rate of the oil pump according to the current operating condition of the vehicle, the current loss heat power of the motor, and the target temperature of the lubricating oil | S140 |

↓

| Determine a target rotational speed of the oil pump according to the target flow rate of the oil pump | S150 |

FIG. 1

Acquire a current loss heat power of the motor — S210

Determine a current operating condition of a vehicle according to a power interval in which the loss heat power is located — S220

Determine a target temperature of a lubricating oil according to the current operating condition of the vehicle — S230

Determine a target flow rate of the oil pump according to the current operating condition of the vehicle, the current loss heat power of the motor, and the target temperature of the lubricating oil — S240

Determine a target rotational speed of the oil pump according to the target flow rate of the oil pump — S250

When the current operating condition of the vehicle is the first operating condition or the second operating condition, acquire a rotational speed threshold of the oil pump allowed under the vehicle's NVH — S260

Compare the target rotational speed of the oil pump with the rotational speed threshold of the oil pump — S270

When the target rotational speed of the oil pump is less than or equal to the rotational speed threshold of the oil pump, control the oil pump to run at the target rotational speed of the oil pump — S280

When the target rotational speed of the oil pump is greater than the rotational speed threshold of the oil pump, determine a theoretical temperature of an oil inlet of a heat exchanger at the rotational speed threshold of the oil pump, and control the oil pump to run at the target rotational speed of the oil pump or at a derated speed corresponding to the rotational speed threshold of the oil pump, according to the theoretical temperature of the oil inlet of the heat exchanger — S290

FIG. 2

Rotational speed curve under allowable
noise of the oil pump for different
operating conditions

Rotational speed
$n_{eop}$ of the oil
pump

Operating
condition 3

Operating
condition 2

Operating condition 1

Rotational speed of oil pump for loss
heat dissipation of operating condition 1

Derated
operating
range

Rotational speed
n of the motor

FIG. 3

Acquire a current loss heat power of the motor — S410

Determine a current operating condition of a vehicle according to a power interval in which the loss heat power is located — S420

Determine a target temperature of a lubricating oil according to the current operating condition of the vehicle — S430

Determine a target flow rate of the oil pump according to the current operating condition of the vehicle, the current loss heat power of the motor, and the target temperature of the lubricating oil — S440

Determine a target rotational speed of the oil pump according to the target flow rate of the oil pump — S450

Acquire an external characteristic flow rate curve of the oil pump — S460

Estimate a theoretical temperature of the lubricating oil pumped by the oil pump through an oil temperature estimation method — S470

Determine a theoretical rotational speed of the oil pump corresponding to the theoretical temperature of the lubricating oil according to the external characteristic flow rate curve — S480

When the target rotational speed of the oil pump is less than or equal to the theoretical rotational speed of the oil pump, control the oil pump to run at the target rotational speed of the oil pump — S491

When the target rotational speed of the oil pump is greater than the theoretical rotational speed of the oil pump, control the oil pump to run at the theoretical rotational speed of the oil pump — S492

FIG. 4

Viscosity η of
lubricating oil

Temperature T of
lubricating oil

FIG. 5

Temperature T
of lubricating
oil

Low temperature range

High temperature range

Current I of
oil pump

FIG. 6

700

710 720 730

Acquiring module

Operating condition determining module

Temperature determining module

Flow rate determining module 740

Rotational speed determining module 750

FIG. 7

## INTERNATIONAL SEARCH REPORT

| International application No. |
| --- |
| **PCT/CN2023/135378** |

| A. | CLASSIFICATION OF SUBJECT MATTER |
| --- | --- |

F04B49/06(2006.01)i; F04B49/20(2006.01)i; H02K9/193(2006.01)i

According to International Patent Classification (IPC) or to both national classification and IPC

| B. | FIELDS SEARCHED |
| --- | --- |

Minimum documentation searched (classification system followed by classification symbols)

　　IPC:F04B,H02K

Documentation searched other than minimum documentation to the extent that such documents are included in the fields searched

Electronic data base consulted during the international search (name of data base and, where practicable, search terms used)

　　CNTXT, ENTXTC, WPABSC, CNKI: 电机, 油泵, 发热功率, 工况, 温度, 流量, 转速, 密度, motor, pump, heat+ w power, working w condition, t, flow, speed, density

| C. | DOCUMENTS CONSIDERED TO BE RELEVANT | |
| --- | --- | --- |
| Category* | Citation of document, with indication, where appropriate, of the relevant passages | Relevant to claim No. |
| PX | CN 116498539 A (VOYAH AUTOMOBILE TECHNOLOGY CO., LTD.) 28 July 2023 (2023-07-28) <br> claims 1-10 | 1-10 |
| X | CN 112234770 A (HUAWEI TECHNOLOGIES CO., LTD.) 15 January 2021 (2021-01-15) <br> description, paragraphs 38-137 | 1-10 |
| A | CN 111219319 A (GUANGZHOU AUTOMOBILE GROUP CO., LTD.) 02 June 2020 (2020-06-02) <br> entire document | 1-10 |
| A | CN 113939994 A (HUAWEI DIGITAL POWER TECHNOLOGIES CO., LTD.) 14 January 2022 (2022-01-14) <br> entire document | 1-10 |
| A | US 2020370464 A1 (GUANGZHOU AUTOMOBILE GROUP CO., LTD.) 26 November 2020 (2020-11-26) <br> entire document | 1-10 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 December 2023** | **12 January 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/135378** |

**C.    DOCUMENTS CONSIDERED TO BE RELEVANT**

| Category* | Citation of document, with indication, where appropriate, of the relevant passages | Relevant to claim No. |
|---|---|---|
| A | US 2021315131 A1 (TOSHIBA MITSUBISHI-ELECTRIC INDUSTRIAL SYSTEMS CORP.) 07 October 2021 (2021-10-07)<br>     entire document | 1-10 |

Form PCT/ISA/210 (second sheet) (July 2022)

**INTERNATIONAL SEARCH REPORT**
Information on patent family members

International application No.

**PCT/CN2023/135378**

| Patent document cited in search report | | | Publication date (day/month/year) | Patent family member(s) | | | Publication date (day/month/year) |
|---|---|---|---|---|---|---|---|
| CN | 116498539 | A | 28 July 2023 | None | | | |
| CN | 112234770 | A | 15 January 2021 | None | | | |
| CN | 111219319 | A | 02 June 2020 | None | | | |
| CN | 113939994 | A | 14 January 2022 | None | | | |
| US | 2020370464 | A1 | 26 November 2020 | WO | 2018019183 | A1 | 01 February 2018 |
| | | | | US | 11041428 | B2 | 22 June 2021 |
| US | 2021315131 | A1 | 07 October 2021 | JP | 6832471 | B1 | 24 February 2021 |
| | | | | JPWO | 2021019676 | A1 | 13 September 2021 |
| | | | | WO | 2021019676 | A1 | 04 February 2021 |

Form PCT/ISA/210 (patent family annex) (July 2022)

**EP 4 707 599 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310760914